# EUROPÄISCHE PATENTSCHRIFT

(11) **EP 2 035 810 B1**
(45) Veröffentlichungstag und Bekanntmachung des Hinweises auf die Patenterteilung: **27.03.2019**
(21) Anmeldenummer: 07728423.0
(22) Anmeldetag: 24.04.2007
(51) Int. Cl.: G01N 21/47, G01N 21/898, B23K 26/00

(54) **VERFAHREN ZUR ANALYSE DER REFLEXIONSEIGENSCHAFTEN**
METHOD FOR ANALYSING REFLECTIVE PROPERTIES
PROCÉDÉ D'ANALYSE DES PROPRIÉTÉS DE RÉFLEXION

(30) Priorität: 20.06.2006 DE 102006028238
(43) Veröffentlichungstag der Anmeldung: 18.03.2009
(73) Patentinhaber: Benecke-Kaliko AG, 30419 Hannover (DE)
(72) Erfinder: STAHLHUT, Oliver, 30900 Wedemark/OT Mellendorf (DE); NEUMANN, Christian, 31139 Hildesheim (DE); MÄKER, Michael, 30449 Hannover (DE)
(74) Vertreter: Finger, Karsten
(86) Internationale Anmeldenummer: PCT/EP2007/053967
(87) Internationale Veröffentlichungsnummer: WO 2007/147664

(56) Entgegenhaltungen:
- US-A- 4 802 759
- US-A- 4 986 664
- US-A1- 2005 146 722
- I. ARINO, U. KLEIST, L. MATTSSON, M. RIGDAHL: "On the Relation Between Surface Texture and Gloss of Injection-Molded igmented Plastics" POLYMER ENGINEERING AND SCIENCE, Bd. 45, Nr. 10, 1. Oktober 2005 (2005-10-01), Seiten 1343-1356, XP002447054

## Beschreibung

Die Erfindung betrifft ein Verfahren zur Analyse und Beschreibung der Reflexionseigenschaften einer dreidimensional strukturierten Originaloberfläche, insbesondere einer genarbten Oberfläche, in Form eines Datensatzes, der einem Bearbeitungs- oder Prüfsystem für Oberflächen zur Verfügung gestellt wird.

Verfahren zur Beurteilung bzw. zur Analyse des Reflexionsverhaltens von Oberflächen sind bekannt.

Eine der einfachsten Methode besteht z.B. in der Bestimmung eines "Glanzgrades" nach genormten Messbedingungen, etwa der ISO 2813, bei der die in einem Winkel von 60° von der Oberfläche reflektierte Lichtstrahlung gemessen und einer Klassifizierung in Glanzgrade von matt bis glänzend zugeordnet wird, je nach prozentualer Reflexion. Ein solcher Glanzgrad beschreibt jedoch lediglich die gemittelte Glanzfähigkeit der gesamten betrachteten Fläche bei einem bestimmten Lichtverhältnis.

Darüber hinaus existieren Verfahren, bei denen eine Aussage über den Stoff selbst durch die Analyse des Reflexionsverhaltens seiner Oberfläche gewonnen wird. Dies nutzt man etwa bei der Analyse von stofflichen Proben, wie Flüssigkeiten oder Pulvern, oder z.B. bei der Untersuchung von Schweißverbindungen, oder bei der Steuerung von Bearbeitungsprozessen. So zeigt etwa die EP 618851A1 ein Verfahren zum Entfernen von Oberflächenbeschichtungen / Lacken auf einem Substrat, wobei das Verfahren durch das Auswerten einer Farbdifferenz eines reflektierten Lichtes so gesteuert wird, das nur die abzutragende Beschichtung entfernt und das Substrat selbst nicht beschädigt wird.

Bei der Herstellung von künstlichen Oberflächenstrukturen oder Oberflächenbeschichtungen, wie z.B. bei der Herstellung von Kunstleder oder Kunststoff-Formhäuten für Teile der Innenverkleidung von Kraftfahrzeugen, also etwa Türverkleidungen oder Armaturenbretter, sind Verfahren bekannt, bei denen die Reflexionseigenschaften einer Referenzoberfläche/Musteroberfläche unter kontrollierter Beleuchtung bewertet und weiteren Kontroll- oder Arbeitsprozessen zugrunde gelegt werden. Die meisten dieser Bestimmungsverfahren weisen die Eigenart auf, dass zwischen stark oder schwach reflektierenden Teilbereichen einer Referenzoberfläche bisher ausschließlich die subjektive Bewertung eines geübten Betrachters ausschlaggebend ist. Eine solche subjektive Bewertung kann nachteiligerweise aber nur unzureichend genau in Bildverarbeitungen oder in den Herstellungsprozess beeinflussende automatische Systeme übertragen werden.

Andererseits ist die subjektive Bewertung durch das menschliche Auge eine äußerst präzise und bisher durch automatische Verfahren nicht zu ersetzende Art der Beurteilung einer strukturierten Oberfläche, die selbst kleinste Veränderungen im Erscheinungsbild der Oberfläche deutlich registriert. Übergänge oder Grenzbereiche, die etwa durch das Aneinandersetzen von Teilstücken zu einer Gesamtoberfläche entstehen, Rapportbildung und Moulettenstreifen, werden ebenso sichtbar wie unterschiedliche bzw. "unnatürlich" wirkende Lichtreflexion bzw. Lichtbrechung, die z.B. durch eine schachbrettartige Bilderung in der erzeugten Oberfläche entsteht.

Die US 2005/0146722 A1 offenbart ein Verfahren zur Gestaltung einer Kunststoffoberfläche, bei dem virtuelle Parameter für das Herstellen einer virtuellen Oberfläche - z. B. auf einem Bildschirm, - so lang modifiziert werden, bis eine genügende Übereinstimmung mit einem gewünschten Erscheinungsbild besteht, wonach dann die Herstellparameter definiert werden. Dabei werden auch Beleuchtungswinkel und Beobachtungswinkel berücksichtigt. Das Verfahren generiert, ausgehend von einem topographischen Profil der Makrotextur einer Oberfläche Parameter, die die Reflexionseigenschaften der Oberfläche beschreiben.

Die US 4,802,759 offenbart eine Vorrichtung zur Vermessung der Außenoberfläche von dreidimensionalen Gegenständen, bei der ein Netz von Gitterlinien in Form eines Rasters auf die Außenoberfläche projiziert wird und die absolute Position von einzelnen Punkten der Außenoberfläche nach einem Triangulationsprinzip anhand von Lichtstrahlen und deren Reflexionen gemessen wird.

Die US 4,986,664 offenbart ein Verfahren und eine Vorrichtung zum kontrollierten Abdampfen von Oberflächenmaterial mit Hilfe eines Lasers, wobei vor und nach den jeweiligen Laserbehandlungen die Topographie der Oberfläche gemessen und in elektrische Signale umgewandelt wird.

Die Veröffentlichung "On the Relation Between Surface Texture and Gloss of Injection.Molded Pigmented Plastics" von Arino, Kleist Mattson und Rigdahl in "Polymer Engineering Science", Bd. 45 Nr. 10, 1.Oktober 2005, S 1343-1356 offenbart Gleichungssysteme, die Zusammenhänge zwischen Textur/Rauigkeit einer Oberfläche und ihrem Glanz beschreiben. Dabei soll ermittelt werden, in wie weit bekannte Algorithmen und Modelle geeignet sind, einen Glanzgrad einer Oberfläche durch Oberflächenparameter zu beschreiben.

Will man z. B. eine Kunststoff- Formhaut mit einer möglichst natürlich wirkenden Ledernarbung herstellen, so spielt insbesondere das Reflexionsverhalten eine große Rolle. Das menschliche Auge ist beim Anblick einer Lederoberfläche ein bestimmtes Reflexionsverhalten bei unterschiedlichsten Lichtverhältnissen gewöhnt und reagiert äußerst ablehnend auf Kunstlederoberflächen, die genau dieses Reflexionsverhalten nicht ebenfalls aufweisen. Ein Armaturenbrett, das mit einer Kunststoff- Formhaut mit Ledernarbung bezogen ist, welche bei Sonnenlicht unangenehm reflektiert, wird vom Verbraucher abgelehnt. Dies führt oft dazu, dass bei der Herstellung solcher Formhäute eine zusätzliche und die Reflexion mindernde dreidimensionale "künstliche" Struktur aufgeprägt wird, etwa in Form einer regelmäßigen Lochung. Danach ist jedoch in aller Regel der Eindruck einer "echten Lederoberfläche" nicht mehr vorhanden.

Der Erfindung lag also die Aufgabe zugrunde, ein Verfahren bereitzustellen, mit dessen Hilfe die Reflexionseigenschaften einer Oberfläche objektiv bestimmbar werden, welches darüber hinaus die Reflexionseigenschaften in Parameter umformt, die nachgeschalteten Systemen zur Verfügung gestellt werden können, welches eine naturgetreue Beschreibung der Reflexionseigenschaften erlaubt und diese Eigenschaften in Form eines Datensatzes u.a. für die Herstellung von künstlichen Oberflächen zur Verfügung stellt.

Gelöst wird diese Aufgabe durch die Merkmale des Hauptanspruchs. Weitere vorteilhafte Ausbildungen sind in den Unteransprüchen offenbart. Ebenfalls offenbart ist eine vorteilhafte Verwendung des erfindungsgemäßen Verfahrens.

Dabei besteht die erfindungsgemäße Lösung darin, dass
a) zunächst die Topologie der Originaloberfläche mit Hilfe eines dreidimensionalen Abtastverfahrens ermittelt wird und die so ermittelten und im Wesentlichen aus den zu jedem Flächenelement eines über die Originaloberfläche gespannten Rasters gehörigen Höhen bzw. Tiefen bestehenden topologischen Daten in einem ersten Datensatz gespeichert werden, wobei jedem Flächen- bzw. Rasterelement ein gemessener Tiefenwert so zugeordnet ist, dass eine Tiefenkarte der Originaloberfläche entsteht,
b) der erste Datensatz einer Beurteilung der Tiefenwerte im Hinblick auf ihren Einfluß auf die Reflexionseigenschaften unterworfen wird,
c) abhängig von der Beurteilung jedem Flächenelement ein Reflexionswert als Parameter zugeordnet und in einem zweiten Datensatz gespeichert wird,
wonach der die jedem Flächenelement zugeordneten Reflexionswerte / Parameter enthaltende zweite Datensatz weiteren Bearbeitungs- oder Prüfsystemen zur Verfügung gestellt wird.

Während die bisher bekannten Verfahren lediglich eine subjektive Bewertung der Gesamtfläche über den Glanzgrad beinhalten oder über Fotos oder CAD-Simulationen (Computer-Aided-Design) einer Oberfläche pauschal eine Reflexion unter Einwirkung virtueller Beleuchtungsquellen zuweisen, besteht der wesentliche Schritt bei der erfindungsgemäßen Lösung in der Kopplung der Reflektionseigenschaften einer Oberfläche an die tatsächlich in der dreidimensionalen Oberfläche vorhandene makroskopische Tiefenstruktur in den differentiell kleinen Flächenelementen. Das erfindungsgemäße Verfahren geht also weg von einer pauschalen Betrachtung und erzeugt eine Korrelation von Tiefenstruktur, d.h. hoch aufgelöster topologischer Karte der Oberfläche, und lokalem Reflexionsverhalten.

Dabei sind die Verfahrensschritte b) und c) so ausgebildet, dass
b) der erste Datensatz in Bezug auf die Tiefenwerte einer Kantendetektion und anschließend einer Mittelung unterworfen wird,
c) jedem Flächenelement der durch die Mittelung erhaltene und die Häufigkeit und/oder Höhe der Kanten beschreibende Wert als Reflexionswert zugeordnet und in einem zweiten Datensatz gespeichert wird.

Ausgehend von dem physikalischen Effekt der Streuung des Lichtes an Kanten und der dadurch beeinflussten Reflexionsfähigkeit einer zufällig angeordneten Anzahl von Kanten besteht die hier weitergebildete Lösung darin, das an sich aus der Bildverarbeitung bekannte Verfahren der Kantendetektion mittels bestimmter mathematischer Operatoren, also z. B. mittels Sobel- oder Laplace-Operatoren, für die Reflexionsanalyse von dreidimensionalen Oberflächen nutzbar zu machen, indem erstmalig tatsächliche und physisch vorhandene Tiefeninformationen bzw. Tiefenunterschiede, d.h. tatsächliche Kanten, als Daten für die Berechnung bereitgestellt werden.

In der Bildverarbeitung erfolgte nämlich bisher lediglich eine zweidimensionale Betrachtung, Erkennung und Verarbeitung von "Grenzen" innerhalb eines Bildes, die durch Helligkeitsunterschiede hervorgerufen wurden. Diese Grenzen werden "Kanten" und deren Erkennung als "Kantendetektion" bezeichnet. Genutzt wird eine solche Kantendetektion beispielsweise zum Erkennen oder Zählen von zu bearbeitenden Gegenständen auf einem Fließband, die mit einer Kamera fotografiert oder gefilmt werden. Eine solche zweidimensionale Betrachtung reicht zwar zum Erkennen von zweidimensional örtlichen Zuordnungen aus, nicht jedoch für die komplizierte Struktur einer dreidimensionalen Oberfläche und die Modellierung einer daraus abzuleitende Reflexionseigenschaft.

Die durch die Reflexionswerte beschriebenen Reflexionseigenschaften müssen im Übrigen nicht als absolute Werte gespeichert werden; es reichen für die Durchführung des Verfahrens als auch für dessen Verwendung die relativen Reflexionswerte, also die Differenzen der Reflexionswerte einzelner Flächenelemente. Beispielsweise können die relativen Häufigkeiten von Kanten als Parameter gespeichert werden, der den Reflexionswert beschreibt.

Eine Weiterbildung besteht darin, dass die Mittelung nach der Kantendetektion so erfolgt, dass Flächenelemente zu Gruppen zusammengefasst werden und jeweils innerhalb der Gruppen durch Nachbarschaftsoperationen gemittelte Kantenhäufigkeiten und /oder Höhen den Gruppen zugeordnet und in dem zweiten Datensatz gespeichert werden. Beispielsweise erfolgt eine solche Mittelung durch einen Gauß-Filter als Operator. Hierdurch erhält man eine Charakterisierung oder Pauschalisierung, durch die die ggf. stark variierende Anzahl und Stärke/Höhe der Kanten auf angemessen vergleichmäßigte Reflexionswerte zurückgeführt wird, welche im weiteren Verfahren und z.B. in der Nutzung der Daten zur Steuerung von Bearbeitungsmaschinen von Vorteil sein können.

Eine weitere vorteilhafte Weiterbildung besteht darin, dass eine richtungsabhängige Filterung der Tiefenwerte des ersten Datensatzes vor der Kantendetektion erfolgt. Durch eine solche mit verschiedenen mathematischen Operatoren durchführbare richtungsabhängige Filterung wird die durch die normale Kantendetektion lediglich an der Kantenhöhe und -häufigkeit orientierte Aussage über die Reflexionsfähigkeit wesentlich und dahingehend verfeinert, dass die Reflexionseigenschaften bei unterschiedlichen Beleuchtungsverhältnissen oder Betrachtungswinkeln ebenfalls objektiv und messbar dargestellt werden können.

Eine weitere vorteilhafte Weiterbildung besteht darin, dass die Filterung vor der Kantendetektion durch eine gerichtete Gaußfilterung erfolgt. Hier handelt es sich um einen einfachen und schnell arbeitenden Operator, der es ermöglicht, eine ausreichende Anzahl von Richtungen innerhalb vertretbarer Zeiten im Hinblick auf ihre Reflexionseigenschaften darzustellen.

Ein besonders vorteilhafte Verwendung des Verfahren zur Beeinflussung / Verbesserung der Reflexionseigenschaften von künstlich hergestellten Oberflächen, insbesondere Oberflächen genarbter Kunststoff-Folien, besteht darin, dass
d) die Reflexionswerte des zweiten Datensatzes in Klassen eingeteilt werden,
e) die den klassifizierten Reflexionswerten zugeordneten Tiefenwerte des ersten Datensatzes entsprechend der Klassifizierung verändert werden
f) die veränderten Tiefenwerte als Parameter zur elektronischen Steuerung eines Werkzeuges zur Bearbeitung der künstlich hergestellten Oberfläche genutzt werden.

Damit lässt sich das erfindungsgemäße Verfahren für jegliche Art von Herstellungsverfahren künstlicher Oberflächen verwenden. Die veränderten und somit im Hinblick auf die Reflexionseigenschaft optimierten Tiefenstrukturen einer Oberfläche können als einfache Parameter damit jedem wie auch immer vorab erzeugten grundlegenden Tiefenschema / Strukturschema überlagert werden und sind damit als Steuergrößen direkt verfügbar. Eine solche Verwendung würde es beispielsweise ermöglichen, ein von seiner Form und Ausprägung für ein Automobilinterieur gewähltes Leder, z.B. Wasserbüffelleder, welches zwar einen vom Verbraucher gewünschten "robusten Eindruck" besitzt, jedoch auf einem Armaturenbrett bei bestimmtem Lichteinfall unangenehm reflektiert, als Kunststoff- Formhaut mit einer Reflexionsoptimierten Tiefenstruktur herzustellen, ohne den gewünschten Gesamteindruck zu beeinflussen.

## Patentansprüche

1. Verfahren zur Analyse und Beschreibung der Reflexionseigenschaften einer dreidimensional strukturierten Originaloberfläche, insbesondere einer genarbten Oberfläche, in Form eines Datensatzes, der einem Bearbeitungs- oder Prüfsystem für Oberflächen zur Verfügung gestellt wird, wobei
a) zunächst die Topologie der Originaloberfläche mit Hilfe eines dreidimensionalen Abtastverfahrens ermittelt wird und die so ermittelten und im Wesentlichen aus den zu jedem Flächenelement eines über die Originaloberfläche gespannten Rasters gehörigen Höhen- bzw. Tiefenwerte bestehenden topologischen Daten in einem ersten Datensatz gespeichert werden, wobei jedem Flächen- bzw. Rasterelement ein gemessener Tiefenwert so zugeordnet ist, dass eine Tiefenkarte der Originaloberfläche entsteht,
b) der erste Datensatz einer Beurteilung der Tiefenwerte im Hinblick auf ihren Einfluß auf die Reflexionseigenschaften unterworfen wird,
c) abhängig von der Beurteilung jedem Flächenelement ein Reflexionswert zugeordnet und in einem zweiten Datensatz gespeichert wird,
wonach der die jedem Flächenelement zugeordneten Reflexionswerte enthaltende zweite Datensatz weiteren Bearbeitungs- oder Prüfsystemen zur Verfügung gestellt wird, wobei die Verfahrensschritte b) und c) so ausgebildet sind, dass
b) der erste Datensatz in Bezug auf die Tiefenwerte einer Kantendetektion und anschließend einer Mittelung unterworfen wird, wobei die Mittelung nach der Kantendetektion so erfolgt, dass Flächenelemente zu Gruppen zusammengefasst werden und jeweils innerhalb der Gruppen durch Nachbarschaftsoperationen gemittelte Kantenhäufigkeiten und /oder Höhen den Gruppen zugeordnet und in dem zweiten Datensatz gespeichert werden
c) jedem Flächenelement der durch die Mittelung erhaltene und die Häufigkeit und/oder Höhe der Kanten beschreibende Wert als Reflexionswert zugeordnet und in einem zweiten Datensatz gespeichert wird.

2. Verfahren nach Anspruch 1, **dadurch gekennzeichnet, dass** eine richtungsabhängige Filterung der Tiefenwerte des ersten Datensatzes vor der Kantendetektion erfolgt.

3. Verfahren nach Anspruch 2, **dadurch gekennzeichnet, dass** die Filterung vor der Kantendetektion durch eine gerichtete Gaußfilterung erfolgt.

4. Verwendung des Verfahren nach Anspruch 1 bis 3 zur Beeinflussung / Verbesserung der Reflexionseigenschaften künstlich hergestellter Oberflächen, insbesondere Oberflächen genarbter Kunststoff-Folien, **dadurch gekennzeichnet, dass**
d) die Reflexionswerte des zweiten Datensatzes in Klassen eingeteilt werden,
e) die den klassifizierten Reflexionswerten zugeordneten Tiefenwerte des ersten Datensatzes entsprechend der Klassifizierung verändert werden,
f) die veränderten Tiefenwerte als Parameter zur elektronischen Steuerung eines Werkzeuges zur Bearbeitung der künstlich hergestellten Oberfläche genutzt werden.

## Claims

1. Method for analyzing and describing the reflection properties of a three-dimensionally structured original surface, in particular an embossed surface, in the form of a data record that is made available to a machining system or testing system for surfaces, wherein
a) firstly the topology of the original surface is determined with the aid of a three-dimensional scanning method, and the topological data thus determined and essentially comprising the height values and depth values belonging to each surface element of a raster spanning the original surface, are stored in a first data record, each surface element or raster element being assigned a measured depth value such that a depth map of the original surface results,
b) the first data record is subjected to an assessment of the depth values with regard to their influence on the reflection properties,
c) a reflection value is assigned to each surface element, depending on the assessment, and is stored in a second data record,
after which the second data record containing the reflection values assigned to each surface element is made available to further machining systems or testing systems, wherein the method steps b) and c) are designed such that
b) the first data record is subjected to an edge detection and subsequently an averaging with reference to the depth values, wherein the averaging is performed after the edge detection such that surface elements are combined into groups, and in each case edge frequencies and/or heights averaged inside the groups by proximity operations are assigned to the groups and stored in the second data record,
and
c) the value that is obtained by the averaging and describing the frequency and/or height of the edges is assigned to each surface element as reflection value and is stored in a second data record.

2. Method according to Claim 1, **characterized in that** a directionally dependent filtering of the depth values of the first data record is performed before the edge detection.

3. Method according to Claim 2, **characterized in that** the filtering is performed before the edge detection by a directed Gaussian filtering.

4. Use of the method according to Claims 1 to 3 in order to influence/improve the reflection properties of artificially produced surfaces, in particular surfaces of embossed plastic films, **characterized in that** d) the reflection values of the second data record are divided into classes,
e) the depth values, assigned to the classified reflection values, of the first data record are varied in accordance with the classification, and
f) the varied depth values are used as parameters for electronically controlling a tool in order to machine the artificially produced surface.

## Revendications

1. Procédé d'analyse et de description des caractéristiques de réflexion d'une surface originale structurée de façon tridimensionnelle, notamment d'une surface texturée, sous la forme d'un jeu de données qui est mis à disposition d'un système de traitement ou de contrôle des surfaces, procédé selon lequel
a) la topologie de la surface originale est tout d'abord déterminée à l'aide d'un procédé de palpage tridimensionnel, et les données topologiques ainsi déterminées et qui se composent sensiblement des valeurs de hauteur ou de profondeur appartenant à chaque élément de surface d'une grille tendue sur la surface originale, sont enregistrées dans un premier jeu de données, une valeur de profondeur mesurée étant associée à chaque élément de surface ou de grille de telle sorte qu'une carte de profondeur de la surface originale est obtenue,
b) le premier jeu de données est soumis à une évaluation des valeurs de profondeur en vue de déterminer leur influence sur les caractéristiques de réflexion,
c) une valeur de réflexion est associée à chaque élément de surface en fonction de l'évaluation et enregistrée dans un deuxième jeu de données,
après quoi le deuxième jeu de données qui contient les valeurs de réflexion associées à chaque élément de surface est mis à disposition de systèmes de traitement ou de contrôle supplémentaires, les étapes de procédé b) et c) étant configurées de telle sorte que
b) le premier jeu de données est soumis à une détection des bords et ensuite à une intégration en référence aux valeurs de profondeur, l'intégration après la détection des bords étant effectuée de telle sorte que les éléments de surface sont assemblés en groupes et les fréquences de bord et/ou hauteurs respectivement intégrées par des opérations de voisinage à l'intérieur des groupes sont associées aux groupes et enregistrées dans le deuxième jeu de données,
c) la valeur obtenue par l'intégration et qui décrit la fréquence et/ou la hauteur des bords est associée à chaque élément de surface en tant que valeur de réflexion et enregistrée dans un troisième jeu de données.

2. Procédé selon la revendication 1, **caractérisé en ce qu'**un filtrage dépendant de la direction des valeurs de profondeur du premier jeu de données est effectué avant la détection des bords.

3. Procédé selon la revendication 2, **caractérisé en ce que** le filtrage avant la détection des bords est effectué par un filtrage de Gauss directionnel.

4. Utilisation du procédé selon les revendications 1 à 3 pour influencer/améliorer les caractéristiques de réflexion de surfaces fabriquées artificiellement, notamment de surfaces de films en matière plastique texturés, **caractérisée en ce que** d) les valeurs de réflexion du deuxième jeu de données sont subdivisées en classes,
e) les valeurs de profondeur du premier jeu de données associées aux valeurs de réflexion classifiées sont modifiées conformément à la classification,
f) les valeurs de profondeur modifiées sont utilisées en tant que paramètres pour la commande électronique d'un outil destiné à l'usinage de la surface fabriquée artificiellement.
